# EUROPÄISCHE PATENTSCHRIFT

(11) **EP 2 363 328 B1**
(45) Veröffentlichungstag und Bekanntmachung des Hinweises auf die Patenterteilung: **27.07.2016**
(21) Anmeldenummer: 11152822.0
(22) Anmeldetag: 01.02.2011
(51) Int. Cl.: B60T 17/18, B60T 17/22, B60T 7/04, B60T 11/04, B62H 1/02, B62L 5/18

(54) **Verfahren zum Starten des Antriebsmotors eines Fahrzeugs sowie Fahrzeug, insbesondere Motorrad bzw. Motorroller**
Method for starting the drive motor of a vehicle and vehicle, in particular motorcycle or scooter
Procédé de démarrage du moteur d'entraînement d'un véhicule et véhicule, notamment motocyclette ou scooter

(30) Priorität: 25.02.2010 DE 102010009258
(43) Veröffentlichungstag der Anmeldung: 07.09.2011
(73) Patentinhaber: Bayerische Motoren Werke Aktiengesellschaft, 80809 München (DE)
(72) Erfinder: Rüttinger, Jannis, 85253, Erdweg (DE); Püffel, Peter, Dr., 85354, Freising (DE); Lotti, Massimo, 47900, Rimini (IT)

(56) Entgegenhaltungen:
- CN-U- 201 506 441
- DE-U1-202006 013 227
- JP-A- 2001 097 260
- TW-A- 200 842 067
- TW-A- 201 026 538

## Beschreibung

Fahrzeug, insbesondere Motorrad bzw. Motorroller Die vorliegende Erfindung betrifft ein Fahrzeug gemäß dem Oberbegriff des Patentanspruches 1.

Ein derartiges Fahrzeug ist aus der DE 26 27 039 C3 bekannt und zwar aus dem Abschnitt, in dem der Inhalt des japanischen Gebrauchsmusters Nr. 49-46109 beschrieben wird (vgl. Spalte 2, Absatz 5 und 6 der DE 26 27 039 C3). Zum technischen Hintergrund der vorliegenden Erfindung zählen ferner die DE 196 36 717 A1, TW 200 842 067 A, TV 201 026 538 A, CN 201 605 441 U, JP 2001 097260 A sowie die DE 20 2006 013 227 U1.

Motorroller sind mit einer Fliehkraftkupplung ausgestattet. Um bei stehendem Fahrzeug ein Wegrollen des Motorrollers zu verhindern ist üblicherweise eine Feststellbremse, die im Folgenden auch als "Parkbremse" bezeichnet wird, vorgesehen. Die Parkbremsen von Motorrollern können von Hand ein- und ausgelegt werden.

Bei den zurzeit auf dem Markt angebotenen Motorrollern kann der Motor gestartet werden, obwohl die Parkbremse eingelegt ist. Da, wie bereits erwähnt, Motorroller üblicherweise mit einer Fliehkraftkupplung ausgestattet sind, bemerkt der Fahrer unter Umständen erst, wenn er losfahren möchte, dass die Parkbremse eingelegt ist, was zu Stürzen führen kann.

Aufgabe der Erfindung ist es, ein Fahrzeug, insbesondere ein Motorrad bzw. einen Motorroller zu schaffen, bei dem die Parkbremse mit einer hohen Bediensicherheit bedient wird.

Diese Aufgabe wird durch die Merkmale des Patentanspruches 1 gelöst.

Ausgangspunkt der Erfindung ist ein Fahrzeug, insbesondere ein Motorrad.

Ausgangspunkt der Erfindung ist ein Fahrzeug, insbesondere ein Motorrad bzw. ein Motorroller mit einer Parkbremse und einem "Ständerelement" zum Abstützen des Fahrzeugs in einem Parkzustand. Bei dem Ständerelement kann es sich beispielsweise um einen schräg nach unten ausklappbaren Seitenständer handeln. Alternativ dazu kann es sich auch um einen sogenannten "Hauptständer" handeln, der in etwa mittig an der Unterseite des Fahrzeugs angeordnet ist. Bei ausgeklapptem Hauptständer wird das Gewicht des Fahrzeugs primär durch den Hauptständer getragen. Zusätzlich wird das Fahrzeug noch leicht über das Vorderrad abgestützt. Das Hinterrad ist bei ausgeklapptem Hauptständer üblicherweise von der Fahrbahn abgehoben.

Der Kern der Erfindung besteht darin, dass das Ständerelement mechanisch mit der Parkbremse gekoppelt ist und zwar derart, dass durch Ausklappen des Ständerelements in den Parkzustand die Parkbremse eingelegt und durch Einklappen des Ständerelements vom Parkzustand in den Fahrzustand die Parkbremse wieder ausgelegt wird.

Die mechanische Kopplung des Ständerelements mit der Parkbremse kann beispielsweise über einen Seil- oder Bowdenzug erreicht werden.

Die Parkbremseinrichtung kann durch eine mit dem Hinterrad des Fahrzeugs zusammenwirkende Bremse gebildet sein. Beispielsweise kann vorgesehen sein, dass die Hinterradbremse im Betrieb des Fahrzeugs in herkömmlicher Weise über das hydraulische Bremssystem betätigbar ist und zusätzlich dazu bei stehendem Fahrzeug mechanisch über den Seil- bzw. Bowdenzugmechanismus, der mit dem Ständerelement gekoppelt ist.

Die Parkbremseinrichtung kann somit in die Hinterradbremse integriert sein.

Erfindungsgemäss ist die Parkbremseinrichtung durch eine separate, mit dem Hinterrad zusammenwirkende Bremse gebildet bei der sich z. B. um eine Scheibenbremse oder um eine Trommelbremse handeln kann.

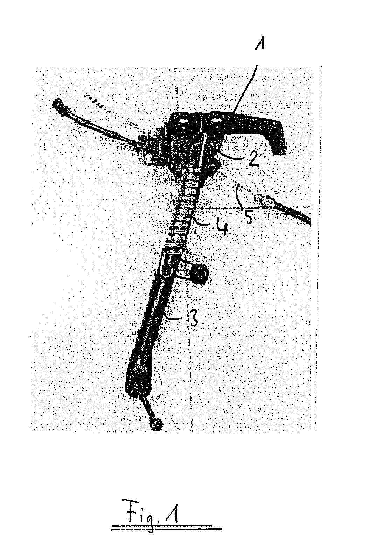

Im Folgenden wird die Erfindung im Zusammenhang mit der Zeichnung näher erläutert. Die einzige Figur 1 zeigt einen Seitenständer bestehend aus einem Ständerträger 1, der fest mit dem Fahrzeug verbunden, z. B. verschraubt wird, und einem relativ um eine Schwenkachse 2 verschenkbaren Ständerelement 3, das automatisch in eine hier nicht näher dargestellte Fahrstellung nach hinten durch eine Betätigungsfeder 4 verschwenkt wird, wenn das Fahrzeug in seine im Wesentliche senkrechte Fahrposition gebracht wird. Der Seitenständer bzw. das Ständerelement 4 ist über einen Seilzug 5 mit einer hier nicht näher dargestellten Parkbremseinrichtung, die z. B. im Bereich des Hinterrads des Fahrzeugs angeordnet sein kann, verbunden. Wird das Ständerelement in die in Figur 1 gezeigte Parkstellung ausgeklappt, so wird dadurch der Seilzug 5 betätigt und die Parkbremse eingelegt. Somit ist sichergestellt, dass die Parkbremse eingelegt ist, wenn das Fahrzeug auf dem Seitenständer abgestellt wird.

## Patentansprüche

1. Fahrzeug, insbesondere Motorrad, insbesondere Motorroller, mit
- einem Ständerelement zum Abstützen des Fahrzeugs in einem Parkzustand und
- einer Parkbremse, wobei das Ständerelement (4) mechanisch mit der Parkbremse gekoppelt ist, derart, dass durch Ausklappen des Ständerelements (4) die Parkbremse eingelegt wird,
**dadurch gekennzeichnet,**
**dass** das Ständerelement (4) über einen Seil- oder Bowdenzug (5) mit der Parkbremse gekoppelt ist und
**dass** die Parkbremse durch eine separate, ausschließlich als Parkbremse fungierende, mechanisch betätigbare Bremseinrichtung gebildet ist.

## Claims

1. A vehicle, especially a motorcycle, especially a motor scooter, with
- a stand element for supporting the vehicle in a parked state and
- a parking brake, wherein the stand element (4) is coupled mechanically to the parking brake such that by unfolding the stand element (4), the parking brake is engaged,
**characterised in that**
the stand element (4) is coupled to the parking brake by a cable pull or by a Bowden cable (5) and
**in that** the parking brake is formed by a separate, mechanically actuatable brake device which functions exclusively as a parking brake.

## Revendications

1. Véhicule, en particulier motocyclette, en particulier scooter comportant :
- une béquille destinée à soutenir le véhicule à l'état de stationnement, et
- un frein de stationnement, la béquille (4) étant accouplée mécaniquement au frein de stationnement de sorte que le frein de stationnement soit actionné par le déploiement de la béquille (4), **caractérisé en ce que**
la béquille (4) est accouplée au frein de stationnement par un tirant à câble ou un câble Bowden (5), et
le frein de stationnement est formé par un dispositif de freinage actionnable mécaniquement séparé fonctionnant exclusivement en tant frein de stationnement.
